# EUROPEAN PATENT SPECIFICATION

(11) **EP 1 289 664 B1**
(45) Date of publication and mention of the grant of the patent: **12.07.2006**
(21) Application number: 01936483.5
(22) Date of filing: 22.05.2001
(51) Int. Cl.: B03B 1/00

(54) **METHOD AND SYSTEM FOR UTILISING WASTE**
VERFAHREN UND ANLAGE ZUR VERWERTUNG VON ABFÄLLEN
PROCEDE ET UN SYSTEME D'UTILISATION DES DECHETS

(30) Priority: 22.05.2000 FI 20001218
(43) Date of publication of application: 12.03.2003
(73) Proprietor: Metso Paper, Inc., 00130 Helsinki (FI)
(72) Inventor: HAUTALA, Jouko, FIN-33400 Tampere (FI)
(74) Representative: TBK-Patent
(86) International application number: PCT/FI2001/000494
(87) International publication number: WO 2001/089702

(56) References cited:
- EP-A1- 0 742 311
- WO-A1-90/14890
- DE-A1- 3 934 478

## Description

The invention relates to a method for utilising waste that contains fibres and combustible material.

The invention also relates to a system for utilising waste that contains fibres and combustible material.

In addition, the invention relates to a method for processing fibre in a paper or board mill that utilises recycled fibre pulp.

Conventionally, the options available in waste disposal and processing have been transport to landfill sites, incineration in mass incineration plants and - to a limited extent - recovery of recyclable materials. The last-mentioned option generally requires separation of wastes at source wherein recyclable waste fractions, such as, biowaste, paper and board, glass and metals are separated and collected separately. However, source separation is always insufficient, which means that the amount of mixed waste is now, and will also be in future, considerable.

The form of energy recovery that has become popular recently is one in which recovered and/or refuse-derived fuel (REF, RDF) processed from waste is burned either in conventional boilers together with other fuel or as the main fuel in combustion plants specially designed for recovered/refuse-derived fuel. The wastes most suitable for energy recovery include packaging, paper and plastic wastes from industry and commerce as well as construction wastes, which can constitute as much as 70 to 80 % of the amount of waste usually transported to landfills. Dry household waste can also be used in the production of energy provided that, among other things, metals, glass and biowaste have been separated from it first.

Most economically, recovered fuel is produced from a source-separated combustible waste fraction, i.e. the so-called energy fraction of waste. The processing stages of this REF fuel (recovered fuel) typically include removal of oversized pieces, crushing of waste, separation of metals as well as removal of sand and stones. Finished REF fuel contains predominantly plastics, wood, paper and board. The proportion of impurities in the fuel may be, for example, of the order of 5 % depending of the sorting process. Recovered fuel can also be produced from unsorted mixed waste by mechanical handling processes, in which case the end product is called RDF fuel (refuse-derived fuel). A difference with respect to the handling of source-separated waste is constituted by a more mixed composition of the waste raw material, which is mainly shown as a higher biowaste content. Consequently, more sorting stages are needed in the production of RDF fuel than at an REF plant, for example, gravimetric separation stages, i.e. sorting stages based on the size and density of particles, whereby heavy matter, such as food scraps, can be efficiently, separated from the fraction intended for combustion. The composition of finished RDF fuel is very much like that of REF fuel, but the proportion of impurities in it can be slightly higher, for example, of the order of 8%.

Energy recovery from waste should not be an end in itself, but rather aim for sensible macroeconomical reclamation of wastes or for making them harmless. In all reclamation of waste, the primary object should be recovery of materials contained in waste when it is economically profitable and, only secondarily, utilisation of waste as fuel. Landfilling should be the very last option.

WO application publication 98/18607 discloses a process for treatment of waste that contains recyclable components, in which process waste is agitated in water employing mechanical force, whereby the size of pieces in waste is reduced and fibres are suspended in water. The heavy fraction containing metals, the lightweight fraction containing plastics and the fraction containing fibres are separated from the suspension in stages. The process is intended for treatment of packaging waste which contains different plastics and mixed materials, in particular board lined with plastic and/or metal foils, and metal cans. The fibre content of this kind of raw material is generally relatively low, wherefore the special problems associated with the recovery of fibres and with the quality of pulp have not been taken into consideration to a sufficient degree in the process. The publication has also failed to take into account matters that form an integral part of the recovery of fibres, such as, meeting of energy demand and circulation of waters.

The recovery of fibres from waste is also discussed, among other things, in GB patent 1,364,474 and in published GB application 2,026,019 and in DE 3934478.

GB-A-1364474 discloses a method and system for utilising fibre containing waste slushed in a pulper, where the waste is reduced to an aqueous slurry containing all of the original waste, except the infrangible material removed by the junk remover. This aqueous slurry waste is discharged through a screen plate, sorted and cleaned and the rejected material is burned.

In DE-A-3934478 the pulper discharges a mixture of pulp, textile and plastics, all of the slushed material is transferred (pumped) from a conventional pulper to a screen to separate the fibre from the rejects. The pulper does not discharge a separate stream of non-defibrable material.

One object of the invention is to make it possible to recover a larger and higher quality portion than before of those fibres contained in waste which until now have been either passed to incineration or taken to a landfill site.

With a view to achieving this object as well as those coming out later, the arrangements according to the invention are characterised in that which is stated in the characterising part of the independent claims.

In the method according to the invention, waste is slushed in a continuous-operation high-consistency pulper in order to suspend in water the fibres contained in the waste, and from the pulper are discharged substantially continuously, on the one hand, fibre suspension through a screen plate and, on the other hand, non-defibrable material by means of a mechanical transfer device. The fibre suspension is sorted and cleaned for use as raw material in paper or board and the non-defibrable material as well as the rejects separated from the fibre suspension in sorting and cleaning stages are used as fuel in energy production and/or utilised as raw material.

Advantageously, the pulper is provided with a screw conveyor, which moves non-defibrable material from the pulper to a reject drum. As the amount of reject is relatively high when slushing mixed waste, conventional arrangements for removal of reject are not sufficient. In order to make the recovery of fibres more effective, this material containing an abundance of plastics is washed first on the screw conveyor and then further in the reject drum and the washing waters used in both washing stages are passed so as to be mixed with the fibre suspension.

Advantageously, the pulper has been arranged to operate at a temperature of about 60 °C, in which connection, on the one hand, defibration is efficient and, on the other hand, bacteria and other micro-organisms carried with waste material do not cause any hygienic harm. Slushing consistency is generally about 10 %. The fibre suspension is discharged from the pulper through a screen plate in which the diameter of holes is 8 - 15 mm, most advantageously about 10 mm. The particles which are larger than this hole size are passed so as to be mixed with the non-defibrable material.

After slushing, the fibre suspension is course screened to remove the reject particles still remaining in it. In coarse screening, a perforated screen is used in which the diameter of holes is 2 - 4 mm, most advantageously about 3 mm. In that connection, pulp is sufficiently clean for the next process stage, which is usually centrifugal cleaning. The function of centrifugal cleaning is to remove sand and other heavy particles from the pulp. After that, the pulp is fine screened and possibly fractionated for various uses. As there is an abundance of relatively inexpensive raw material available, in the fibre recovery line according to the invention there is no need to attempt to maximise the yield of fibres, as in conventional recycling processes, but the quality of fibres can be optimised. Thus, fine screening can be enhanced and the amount of reject increased as compared with conventional fibre recovery processes. Disposal of the increased reject volume presents no problem because said reject can be combusted together with the rejects derived from slushing and coarse screening.

After fine screening, the pulp is washed to improve the quality of the end product. Advantageously, the washed pulp is compressed in the end to a dry matter content of about 50 %, after which it is ready for transport to a site of use situated at a reasonable distance. Alternatively, the pulp can be dried for transport to a dry matter content of about 90 % or delivered as wet to a paper or board machine located in the immediate vicinity.

The fibre recovery process according to the invention consumes a considerable amount of water, which makes it necessary to clean and recirculate the process waters. The waste waters produced in different process stages are collected, treated and returned to the process. Cleaning can be accomplished, for example, as biological treatment, which is followed by clarification and, when needed, by further treatment stages for part of the water amount. The clean water necessary for the water balance of the system is introduced into the pulp washing stage at which it improves the quality of the end product.

Sand is separated from the reject fractions for transport, for example, to a landfill site or for use as earth filling. Water is removed mechanically from combustible reject fractions and it is passed so as to be cleaned. To combustion can be passed, among other things, the non-defibrable material which comes from slushing and from which sand has been separated in a reject drum, the reject from coarse screening, the reject from fine screening as well as the fibre-containing sludge formed in clarification of waste water.

Advantageously, the waste utilised in the process according to the invention is dry waste or mixed waste that has been pre-treated into a form suitable for recovered/refuse-derived fuel. The possible pre-treatment stages include a reduction in size of the pieces of waste, for example, by crushing as well as removal of metals and other undesirable waste fractions. The waste raw material can also be replaced partially or totally with paper and/or board waste collected separately. In this case, too, the process differs from prior art fibre recovery lines, among other things, in the respect that the rejects from the fibre line have in it a clear and economically profitable site of use in the production of energy.

The method described above, in which fine screening is enhanced to improve the quality of fibre material and the reject portion increased as a result of it is passed to the energy production of the plant, is also particularly advantageous in the stock circulation of paper and board machines, in particular of OCC board machines, also when recycled fibre pulp is used as raw material. Today, to maximise the yield of fibres, the reject from screening is returned to the main stock flow, in which connection poor material circulates in the process. As a result of this, the runnability of the paper or board machine deteriorates and the quality of the end product decreases. Optimisation of fine screening and passing of the reject to the boiler of the mill offer a new possibility of optimising the quality of the end product in an economical manner.

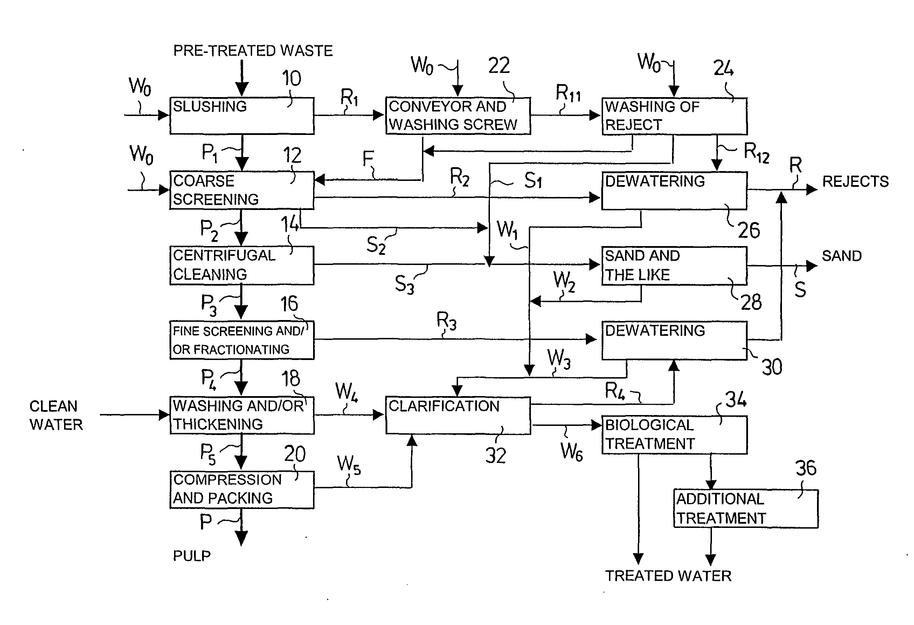

In the following, the principle of the invention will be further described with reference to the appended figure which shows one system according to the invention for utilising waste.

Pre-treated waste is passed to a fibre separation process, which waste has been crushed and screened and from which non-combustible and undesirable fractions, such as metal, glass, stones, biowaste, etc. have been removed. The waste material is slushed in a continuous-operation high-consistency pulper 10, advantageously at a temperature of about 60 °C. A material stream P₁ containing fibres suspended in water and a material stream R₁ containing non-defibrable waste are discharged substantially continuously from the pulper 10. A screw conveyor 22 moves the reject fraction R₁ from the pulper 10 into a combined washing and drying drum 24 of the reject. The reject is washed by means of circulation water W₀ both on the screw conveyor 22 and in the washing drum 24, and fibre-containing washing waters F are returned to be mixed with the fibre suspension P₁.

The fibre fraction P₁ taken out of the pulper 10 through a screen plate is passed to coarse screening 12, in which coarse impurities R₂ and sand S₂ which still remain in the fibre suspension are removed from it. The diameter of the holes in the screen plates used in the pulper 10 is 8 - 12 mm and most advantageously about 10 mm. In the coarse screening 12 of pulp, screen plates are used in which the diameter of holes is 2 - 4 mm and most advantageously about 3 mm. A correctly selected hole size is required in order that, on the one hand, the screen shall not retain an excessive amount of fibres and, on the other hand, centrifugal cleaning 14 provided after the coarse screening 12 should function sufficiently well.

In the centrifugal cleaning stage 14, mainly sand and other heavy matter S₃ are separated from coarse-screened pulp P₂. After the centrifugal cleaning 14, pulp P₃ is passed to a fine screening and/or fractionating stage 16, from which reject R₃ is passed to a dewatering stage 30 and accept P₄ is passed to pulp washing and/or thickening stages 18. The washing of pulp can comprise either one or two stages. In the last process stage 20, washed pulp P₅ is compressed to a dry matter content of about 50 % and packed in transport containers for transport to a location of use situated at a reasonable distance.

Slushing reject R₁₂ washed by means of the conveyor screw 22 and the reject drum 24 is passed to dewatering 26, which can be accomplished, for example, by means of a screw press. The reject R₂ from the coarse screening 12 is processed together with the reject R₁₂ coming from the slushing process. After dewatering, rejects R are passed to useful use, for example, to combustion.

Heavy sand-containing waste fractions S₁- S₃ are also separated in the reject drum 24, in the coarse screening 12 of pulp and in the centrifugal cleaning 14, and water is removed from these fractions in a processing stage 28, after which sand S can be transported to a landfill site or used as earth filling.

Rejects R₃ produced in the fine screening and fractionating are passed to the dewatering 30, which can be accomplished, for example, by means of a drainage band press, after which the rejects are passed to combustion.

Waste waters are produced, on the one hand, when water is removed from the rejects and sand (filtrates W₁- W₃) and, on the other hand, in washing, thickening and compression of pulp (filtrates W₄- W₅). These contaminated water fractions W₄- W₅ are passed to clarification 32, from which fibre-containing sludge R₄ is passed together with the reject R₃ from the fine screening to the dewatering 30 and further to combustion. Clarified waste water W₆ is passed further to a biological treatment stage 34, after which the cleaned water can be circulated to the beginning of the process for use as washing or dilution water in the pulper 10, in the coarse screening 12, on the screw conveyor 22 and/or in the reject drum 24. Alternatively, part of the biologically treated waste water can be passed to additional treatment stages 36, which may be, for example, ultra- or nanofiltration. The clean water necessary for the water balance of the process is passed to the pulp washing stages 18.

## Claims

1. A method for utilising waste that contains fibres and combustible material, wherein the method comprises the stages in which
a) waste is slushed in a continuous-operation high-consistency pulper (10) to suspend in water the fibres contained in the waste, the pulper (10) being provided with a screen plate and a mechanical transfer device (22),
b) from the pulper (10) are discharged substantially continuously, on the one hand, a fibre suspension (P₁) through the screen plate and, on the other hand, non-defibrable material (R₁) by means of the mechanical transfer device (22),
c) the fibre suspension (P₁) is sorted and cleaned for use as raw material in paper or board,
d) the non-defibrable material (R₁) and rejects (R₂, R₃, R₄) separated from the fibre suspension (P₁) in the sorting and cleaning stage are used as fuel in energy production and/or utilised as raw material.

2. A method according to claim 1, **characterised in that** the mechanical transfert device is a screw conveyor (22), **in that** the non-defibrable material (R₁) is moved from the pulper (10) by means of the srew conveyor (22), into a reject drum (24), **in that** the non-defibrable material (R₁) is washed in the screw conveyor (22) and in the reject drawn (24), and **in that** washing waters (F) are passed so as to be mixed with the fibre suspension (P₁).

3. A method according to claim 1 or 2, **characterised in that** the waste is slushed at a temperature of about 60 °C.

4. A method according to any one of claims 1 to 3, **characterised in that** the screen plate has holes the diameter of which is 8 to 15 mm, advantageously about 10 mm.

5. A method according to any one of claims 1 to 4, **characterised in that**, after having been discharged through the screen plate, the fibre suspension (P₁) is coarse screened using a perforated screen having holes the diameter of which is 2 to 4 mm, advantageously about 3 mm.

6. A method according to any one of claims 1 to 4, **characterised in that**, after having been discharged through the screen plate, the fibre suspension (P₁) is coarse screened, centrifugally cleaned, fine screened and washed, and finally the washed pulp is compressed to a dry matter content of about 50 %.

7. A method according to any one of claims 1 to 6, **characterised in that** waste waters (W₁ to W₅) produced in the different stages of the process are treated and returned to the process, and that the clean water required by the process is introduced to a pulp washing stage (18).

8. A method according to any one of claims 1 to 7, **characterised in that** before slushing, the waste is pre-treated to reduce the size of pieces in it and to remove any undesirable waste fractions.

9. A method according to any one of claims 1 to 8, **characterised in that** the waste to be utilised is recovered fuel processed from source-separated combustible waste.

10. A system for utilizing waste that contains fibres and combustible material, which system comprises
a continuous-operation high-consistency pulper (10) for slushing the waste and for suspending in water the fibres contained in the waste,
wherein the pulper (10) comprises a screen plate and a mechanical transfer device (22) and wherein, on the one hand, a fibre suspension (P₁) is discharged substantially continuously from the pulper (10) through the screen plate and, on the other hand, non-defibrable material (R₁) is removed substantially continuously from the pulper (10) by means of the mechanical transfer device (22),
sorting and cleaning devices (12, 14, 16, 18) for sorting and cleaning the fibre suspension (P₁) so as to be used as raw material in paper or board, and
devices for using the non-defibrable material (R₁) and rejects (R₂, R₃, R₄) separated by means of the sorting and cleaning devices (12, 14, 16, 18) as fuel in energy production.

11. A system according to claim 10, **characterised in that** the mechanical transfer device is a screw conveyor (22), **in that** the screw conveyor (22) moves the non-defibrable material (R₁) from the pulper (10) into a reject drum (24), and **in that** the screw conveyor (22) and the reject drum (24) are provided with means for washing the non-defibrable material (R₁) and for passing washing water (F) so as to be mixed with the fibre suspension (P₁) discharged from the pulper (10).

12. A system according to claim 10 or 11, **characterised in that** the pulper (10) is arranged to operate at a temperature of about 60°C.

13. A system according to any one of claims 10 to 12, **characterised in that** the screen plate has holes the diameter of which is 8 to 15 mm, advantageously about 10 mm.

14. A system according to any one of claims 10 to 13, **characterised in that** downstream of the screen plate of the pulper (10) a coarse screening device (12) is arranged wherein the course screening device (12) has holes the diameter of which is 2 to 4 mm, advantageously about 3 mm.

15. A system according to any one of claims 10 to 14, **characterised in that** it comprises devices (32, 34) for cleaning waste waters (W₁ to W₅) produced in the different process stages and for returning them to the process.

16. A system according to any one of claims 10 to 15, **characterised in that** upstream of the pulper (10) devices are arranged for reducing the size of pieces in the waste and for removing undesirable waste fractions.

17. A system according to any one of claims 10 to 15, **characterised in that** it is arranged to utilise recovered fuel processed from source-separated combustible waste.

## Patentansprüche

1. Verfahren zum Nutzen von Abfall, der Fasern und brennbares Material enthält, wobei das Verfahren die folgenden Stufen aufweist, bei denen
a) Abfall in einem kontinuierlich arbeitenden Hochkonsistenzpulper (10) geschlämmt wird, um in Wasser die in dem Abfall enthaltenen Fasern zu suspendieren, wobei der Pulper (10) mit einer Siebplatte und mit einer mechanischen Übertragungsvorrichtung (22) versehen ist,
b) von dem Pulper (10) im Wesentlichen kontinuierlich einerseits eine Fasersuspension (P₁) durch die Siebplatte und andererseits nicht zerfaserbares Material (R₁) mittels der mechanischen Übertragungsvorrichtung (22) abgegeben werden,
c) die Fasersuspension (P₁) sortiert und gereinigt wird für eine Verwendung als Rohmaterial bei Papier oder Karton,
d) das nicht zerfaserbare Material (R₁) und Spuckstoffe (R₂, R₃, R₄), die von der Fasersuspension (P₁) bei der Stufe des Sortierens und Reinigens getrennt worden sind, als ein Brennstoff bei einer Energieerzeugung verwendet werden und / oder als ein Rohmaterial genutzt werden.

2. Verfahren gemäß Anspruch 1,
**dadurch gekennzeichnet, dass**
die mechanische Übertragungsvorrichtung ein Schraubförderer (22) ist,
dass das nicht zerfaserbare Material (R₁) von dem Pulper (10) mittels des Schraubförderers (22) in eine Spuckstofftrommel (24) bewegt wird,
dass das nicht zerfaserbare Material (R₁) in dem Schraubförderer (22) und in der Spuckstofftrommel (24) gewaschen wird, und
dass Waschwässer (F) so passieren, dass sie mit der Fasersuspension (P₁) vermischt werden.

3. Verfahren gemäß Anspruch 1 oder 2,
**dadurch gekennzeichnet, dass**
der Abfall bei einer Temperatur von ungefähr 60°C geschlämmt wird.

4. Verfahren gemäß einem der Ansprüche 1 bis 3,
**dadurch gekennzeichnet, dass**
die Siebplatte Löcher hat, deren Durchmesser 8 bis 15 mm beträgt, in vorteilhafter Weise ungefähr 10 mm.

5. Verfahren gemäß einem der Ansprüche 1 bis 4,
**dadurch gekennzeichnet, dass**
nachdem sie durch die Siebplatte abgegeben worden ist, die Fasersuspension (P₁) grob gesiebt wird unter Verwendung eines perforierten Siebes mit Löchern, deren Durchmesser 2 bis 4 mm betragen, in vorteilhafter Weise ungefähr 3 mm.

6. Verfahren gemäß einem der Ansprüche 1 bis 4,
**dadurch gekennzeichnet, dass**
nachdem sie durch die Siebplatte abgegeben worden ist, die Fasersuspension (P₁) grob gesiebt wird, zentrifugal gereinigt wird, fein gesiebt wird und gewaschen wird, und schließlich die gewaschene Pulpe bis zu einem Trockengehalt von ungefähr 50 % komprimiert wird.

7. Verfahren gemäß einem der Ansprüche 1 bis 6,
**dadurch gekennzeichnet, dass**
Abfallwässer (W₁ bis W₅), die bei den verschiedenen Stufen des Prozesses erzeugt werden, behandelt werden und in den Prozess zurückkehren und
das Reinigungswasser, das durch den Prozess erforderlich ist, zu einer Pulpwaschstufe (18) eingeleitet wird.

8. Verfahren gemäß einem der Ansprüche 1 bis 7,
**dadurch gekennzeichnet, dass**
vor dem Schlämmen der Abfall vorbehandelt wird, um die Stückgröße in ihm zu verringern und um jegliche unerwünschte Abfallanteile zu entfernen.

9. Verfahren gemäß einem der Ansprüche 1 bis 8,
**dadurch gekennzeichnet, dass**
der zu nutzende Abfall wiedergewonnener Brennstoff ist, der aus Quellen-getrenntem brennbaren Abfall verarbeitet wird.

10. System zum Nutzen von Abfall, der Fasern und brennbares Material enthält, wobei das System folgendes aufweist:
einen kontinuierlich arbeitenden Hochkonsistenzpulper (10) zum Schlämmen des Abfalls und zum Suspendieren der in dem Abfall enthaltenen Fasern in Wasser,
wobei der Pulper (10) eine Siebplatte und eine mechanische Übertragungsvorrichtung (22) aufweist, und wobei einerseits eine Fasersuspension (P₁) im Wesentlichen kontinuierlich von dem Pulper (10) durch die Siebplatte abgegeben wird und andererseits nicht zerfaserbares Material (R₁) im Wesentlichen kontinuierlich von dem Pulper (10) mittels der mechanischen Übertragungsvorrichtung (22) entfernt wird,
Sortier- und Reinigungsvorrichtungen (12, 14, 16, 18) zum Sortieren und Reinigen der Fasersuspension (P₁) derart, dass diese als Rohmaterial bei Papier oder Karton verwendet wird, und
Vorrichtungen zum Anwenden des nicht zerfaserbaren Materials (R₁) und der Spuckstoffe (R₂, R₃, R₄), die mittels der Sortier- und Reinigungsvorrichtungen (12, 14, 16, 18) getrennt worden sind, als Brennstoff bei der Energieerzeugung.

11. System gemäß Anspruch 10,
**dadurch gekennzeichnet, dass**
die mechanische Übertragungsvorrichtung ein Schraubförderer (22) ist,
dass der Schraubförderer (22) das nicht zerfaserbare Material (R₁) von dem Pulper (10) in eine Spuckstofftrommel (24) bewegt, und
dass der Schraubförderer (22) und die Spuckstofftrommel (24) mit Einrichtungen versehen sind zum Waschen des nicht zerfaserbaren Materials (R₁) und zum Passieren des Waschwassers (F) derart, dass es mit der Fasersuspension (P₁) vermischt wird, die von dem Pulper (10) abgegeben wird.

12. System gemäß Anspruch 10 oder 11,
**dadurch gekennzeichnet, dass**
der Pulper (10) so eingerichtet ist, dass er bei einer Temperatur von ungefähr 60°C arbeitet.

13. System gemäß einem der Ansprüche 10 bis 12,
**dadurch gekennzeichnet, dass**
die Siebplatte Löcher hat, deren Durchmesser 8 bis 15 mm beträgt, in vorteilhafter Weise ungefähr 10 mm.

14. System gemäß einem der Ansprüche 10 bis 13,
**dadurch gekennzeichnet, dass**
stromabwärtig von der Siebplatte des Pulpers (10) eine Grobsiebvorrichtung (12) angeordnet ist, wobei die Grobsiebvorrichtung (12) Löcher hat, deren Durchmesser 2 bis 4 mm beträgt, in vorteilhafter Weise ungefähr 3 mm.

15. System gemäß einem der Ansprüche 10 bis 14,
**dadurch gekennzeichnet, dass**
es Vorrichtungen (32, 34) aufweist für ein Reinigen von Abfallwässern (W₁ bis W₅), die bei den verschiedenen Prozessstufen erzeugt werden, und zum Zurückbringen von ihnen zu dem Prozess.

16. System gemäß einem der Ansprüche 10 bis 15,
**dadurch gekennzeichnet, dass**
stromaufwärtig von dem Pulper (10) Vorrichtungen angeordnet sind für ein Verringern der Stückgröße in dem Abfall und zum Entfernen von unerwünschten Abfallanteilen.

17. System gemäß einem der Ansprüche 10 bis 15,
**dadurch gekennzeichnet, dass**
es eingerichtet ist, um wiedergewonnenen Brennstoff zu nutzen, der von Quellen-getrenntem brennbaren Abfall verarbeitet wird.

## Revendications

1. Procédé d'utilisation de déchets qui renferment des fibres et du matériau combustible, dans lequel le procédé comprend les étapes dans lesquelles :
a) les déchets sont délayés dans un dispositif de formation de pâte (10) de grande consistance, à fonctionnement en continu, pour mettre en suspension dans l'eau les fibres contenues dans les déchets, le dispositif de formation de pâte (10) étant muni d'une plaque formant écran et d'un dispositif de transfert mécanique (22),
b) à partir du dispositif de formation de pâte (10) sont déchargés sensiblement de façon continue, d'une part, une suspension de fibres (P₁) au travers de la plaque formant écran et, d'autre part, un matériau non apte à être défibré (R₁) au moyen du dispositif de transfert mécanique (22),
c) la suspension de fibres (P₁) est triée et nettoyée pour être utilisée comme matériau brut dans du papier ou du carton,
d) le matériau non apte à être défibré (R₁) et les produits de rejet (R₂, R₃, R₄) séparés de la suspension de fibres (P₁) dans l' étage de triage et de nettoyage sont utilisés comme combustible dans la production d'énergie et/ou utilisé comme matériau brut.

2. Procédé selon la revendication 1, **caractérisé en ce que** le dispositif de transfert mécanique est un transporteur à vis (22), **en ce que** le matériau non apte à être défibré (R₁) est déplacé à partir du dispositif de formation de pâte (10) au moyen du transporteur à vis (22), dans un tambour de rejet (24), **en ce que** le matériau non apte à être défibré (R₁) est lavé dans le transporteur à vis (22) et dans le tambour de rejet (24) et **en ce que** les eaux de lavage (F) passent de façon à être mélangées avec la suspension de fibres (P₁).

3. Procédé selon la revendication 1 ou 2, **caractérisé en ce que** les déchets sont délayés à une température d'environ 60° C.

4. Procédé selon l'une quelconque des revendications 1 à 3, **caractérisé en ce que** la plaque formant écran présente des trous dont le diamètre est de 8 à 15 mm, avantageusement d'environ 10 mm.

5. Procédé selon l'une quelconque des revendications 1 à 4, **caractérisé en ce que**, après avoir été déchargée au travers de la plaque formant écran, la suspension de fibres (P₁) est criblée pour les particules grossières en utilisant un écran perforé ayant des trous dont le diamètre est de 2 à 4 mm, avantageusement d'environ 3 mm.

6. Procédé selon l'une quelconque des revendications 1 à 4, **caractérisé en ce que**, après avoir été déchargée au travers de la plaque formant écran, la suspension de fibres (P₁) est criblée pour les matières grossières, nettoyée de façon centrifuge, criblée pour les matières fines et lavée et finalement la pâte lavée est comprimée selon une teneur en matière sèche d'environ 50 %.

7. Procédé selon l'une quelconque des revendications 1 à 6, **caractérisé en ce que** les eaux de déchets (W₁ à W₅) produites dans les différentes étapes du procédé sont traitées et ramenées au procédé et **en ce que** l'eau propre requise par le procédé est introduite dans l'étage de lavage de pâte (18).

8. Procédé selon l'une quelconque des revendications 1 à 7, **caractérisé en ce que**, avant délayage, les déchets sont prétraités pour réduire la dimension des morceaux et pour éliminer n'importe quelles fractions de déchets non désirées.

9. Procédé selon l'une quelconque des revendications 1 à 8, **caractérisé en ce que** les déchets à utiliser sont récupérés pour être traités comme combustible à partir de déchets de combustible séparés de la source.

10. Système d'utilisation de déchets qui renferment des fibres et du matériau combustible, lequel système comprend :
un dispositif de formation de pâte (10) de grande consistance à opération en continu pour délayer les déchets et pour mettre en suspension dans l'eau les fibres contenues dans les déchets,
dans lequel le dispositif de formation de pâte (10) comprend une plaque formant écran et un dispositif de transfert mécanique (22) et dans lequel, d'une part, une suspension de fibres (P₁) est déchargée sensiblement de façon continue à partir du dispositif de formation de pâte (10) au travers de la plaque formant écran et, d'autre part, un matériau non apte à être défibré (R₁) est éliminé sensiblement en continu à partir du dispositif de formation de pâte (10) au moyen du dispositif de transfert mécanique (22),
des dispositifs de triage et de nettoyage (12, 14, 16, 18) pour trier et nettoyer la suspension de fibres (P₁) afin d'être utilisée comme matériau brut dans le papier ou le carton, et
des dispositifs pour utiliser le matériau non apte à être défibré (R₁) et les rejets (R₂, R₃, R₄) séparés au moyen des dispositifs de triage et de nettoyage (12, 14, 16, 18) comme combustible dans la production d'énergie.

11. Système selon la revendication 10, **caractérisé en ce que** le dispositif de transfert mécanique est un transporteur à vis (22), **en ce que** le transporteur à vis (22) déplace le matériau non apte à être défibré (R₁) du dispositif de formation de pâte (10) dans un tambour de rejet (24) et **en ce que** le transporteur à vis (22) et le tambour de rejet (24) sont munis de moyens pour le lavage du matériau non apte à être défibré (R₁) et pour faire passer l'eau de lavage (F) afin d'être mélangée avec la suspension de fibres (P₁) déchargée à partir du dispositif de formation de pâte (10).

12. Système selon la revendication 10 ou 11, **caractérisé en ce que** le dispositif de formation de pâte (10) est agencé pour fonctionner à une température d'environ 60° C.

13. Système selon l'une quelconque des revendications 10 à 12, **caractérisé en ce que** la plaque formant écran comprend des trous dont le diamètre est de 8 à 15 mm, avantageusement d'environ 10 mm.

14. Système selon l'une quelconque des revendications 10 à 13, **caractérisé en ce que**, en aval de la plaque formant écran du dispositif de formation de pâte (10), est agencé un dispositif de criblage (12) de matériau grossier, dans lequel le dispositif de criblage (12) de matériau grossier comporte des trous dont le diamètre est de 2 à 4 mm, avantageusement d'environ 3 mm.

15. Système selon l'une quelconque des revendications 10 à 14, **caractérisé en ce qu'**il comprend des dispositifs (32, 34) pour nettoyer les eaux de déchets (W₁ à W₅) produites dans les différentes étapes du procédé et pour les ramener au procédé.

16. Système selon l'une quelconque des revendications 10 à 15, **caractérisé en ce que**, en amont du dispositif de formation de pâte (10) des dispositifs sont agencés pour réduire la dimension des morceaux dans les déchets et pour éliminer les fractions de déchets indésirables.

17. Système selon l'une quelconque des revendications 10 à 15, **caractérisé en ce qu'**il est agencé pour utiliser le combustible récupéré traité à partir des déchets combustibles séparés de la source.
